**Europäisches Patentamt**

**European Patent Office**

**Office européen des brevets**

(19)

(11) Veröffentlichungsnummer : **0 521 175 B1**

(12)
# EUROPÄISCHE PATENTSCHRIFT

(45) Veröffentlichungstag der Patentschrift :
**21.04.93 Patentblatt 93/16**

(51) Int. Cl.$^5$ : **G01D 3/04**

(21) Anmeldenummer : **91110764.7**

(22) Anmeldetag : **28.06.91**

(54) **Schaltungsanordnung zur Temperaturkompensation der Spulengüte.**

(43) Veröffentlichungstag der Anmeldung :
**07.01.93 Patentblatt 93/01**

(45) Bekanntmachung des Hinweises auf die
Patenterteilung :
**21.04.93 Patentblatt 93/16**

(84) Benannte Vertragsstaaten :
**CH DE FR GB IT LI**

(56) Entgegenhaltungen :
**EP-A- 0 070 796**
**DE-A- 2 422 503**
**US-A- 2 769 092**

(73) Patentinhaber : **SIEMENS**
**AKTIENGESELLSCHAFT**
**Wittelsbacherplatz 2**
**W-8000 München 2 (DE)**

(72) Erfinder : **Wiesgickl, Bernhard, Dipl.-Ing. (FH)**
**An der Vils 20**
**W-8453 Vilseck (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 521 175 B1

## Beschreibung

Die Erfindung betrifft eine Schaltungsanordnung mit einer ersten Spule mit N1 Windungen, die eine erste Induktivität und einen ersten ohmschen Widerstand aufweist und mit einer zur ersten Spule und mit dieser magnetisch gekoppelten und parallgeschalteten zweiten Spule, die eine zweite Induktivität und einen zweiten ohmschen Widerstand aufweist, mit N2 Windungen.

Derartige Schaltungsanordnungen sind beispielsweise aus der DE 35 26 560 AI bekannt. Hier wird das Problem der Temperaturabhängigkeit bei einem induktiven Sensor betrachtet, der zum Messen von Abständen oder Wegen mit einer Induktivität betrieben wird. Die hier störende Temperaturabhängigkeit kommt durch den Temperaturgang des Spulendrahtes zustande. Der induktive Sensor wird daher so ausgebildet, daß die Temperaturabhängigkeit der Meßwerte vermindert wird. Hierzu wird der Induktivität eine magnetisch gekoppelte Hilfswicklung zugeordnet und an diese Hilfswicklung ein NTC-Widerstand angeschlossen. Die Hilfswicklung ist hierbei galvanisch getrennt und über den NTC-Widerstand kurzgeschlossen. In der Hilfswicklung fließen demzufolge verhältnismäßig hohe Ströme, was entsprechend große Verluste zur Folge hat.

Aus der DE-OS 20 10 134 ist eine Schaltungsanordnung zur induktiven Positions- oder Wegmessung eines Meßobjekts mit einem Übertrager bekannt, wobei das Meßobjekt zwischen der Primär- und Sekundärwicklung des Übertragers liegt. Mit dieser Anordnung soll die Lage oder Lageänderung des Meßobjekts gemessen werden, wobei Meßfehler aufgrund unterschiedlich hoher Temperaturen des Meßobjektes und die dadurch bedingten stark temteraturabhängigen magnetischen Eigenschaften verringert oder sogar beseitigt werden sollen. Um dies zu erreichen, ist der Primärwicklung des Übertragers ein weiteres, die Temperaturabhängigkeit der magnetischen Leitfähigkeit des Meßobjekts kompensierendes Element zugeordnet und in deren Stromkreis aufgenommen. Für das kompensierende Element werden folgende Lösungen vorgeschlagen. Das Element ist beispielsweise eine in Reihe zur Primärwicklung geschaltete, zusätzliche und temperaturabhängige Induktivität. Es kann aber auch als ein in Reihe mit der Primärwicklung geschalteter Widerstand oder eine Widerstandsgruppe mit positivem Temperaturkoeffizienten ausgebildet sein. Eine weitere Ausbildung des Elements besteht darin, daß parallel zur Primärwicklung ein Widerstand oder eine Widerstandsgruppe mit negativem Temperaturkoeffizienten geschaltet wird. Bei der beschriebenen Schaltungsanordnung wird auf die Temperaturabhängigkeit der magnetischen Leitfähigkeit des Meßobjekts bei einem Übertrager abgehoben.

In der Patentschrift EP 0 070 796 wird ein Verfahren zur Kompensation der Temperaturabhängigkeit der Schwingamplitude eines durch einen Generator angeregten Schwingkreises vorgestellt. Von der aus Litze hergestellten Spule des Schwingkreises wird bei dem einen Anschluß der Spule ein Litzendraht von den anderen getrennt und zu einer separaten Klemme herausgeführt, so daß die zwischen diesen beiden Anschlüssen liegende Spule als bifilar gewickelt angesehen werden kann. Der kombinierte Effekt der Induktivitäten beider Wicklungen wird hierbei aufgehoben und der Anschluß mit der Spule aus einem einzelnen Litzendraht erlaubt es, den Widerstand des Leitermaterials dieser Spule zu ermitteln. Zwischen die beiden genannten Anschlüsse wird eine konstante Wechselstromquelle angeschlossen, mit der der Schwingkreis auf seiner Resonanzfrequenz angeregt wird. Durch den Schwingkreis wird eine Spannung eingekoppelt, die proportional zum Widerstand des ermittelten Leitermaterials der Einzeldrahtspule ist und demzufolge größer wird, wenn die Temperatur steigt und bei entgegengesetzten Temperaturbedingungen umgekehrt wird. Durch die Wechselstromquelle kann die temperaturabhängige Güte des Schwingkreises kompensiert werden. Die Kompensation mittels einer Wechselstromstromquelle stellt jedoch einen aufwendigen Regelungsprozeß dar, bei dem zunächst der Widerstand der Einzeldrahtspule gemessen werden muß und von diesem abhängig die Schwingkreisspannung geregelt werden muß, um z.B. eine bestimmte Güte des Schwingkreises temperaturunabhängig zu erhalten. Neben dem Aufwand dieser Lösung sind auch die hierbei auftretenden Verluste in einigen Anwendungsfällen problematisch, wenn die Spule bzw. der Schwingkreis in Geräten mit möglichst geringem Strombedarf eingesetzt werden.

Daher liegt der Erfindung die Aufgabe zugrunde, eine Schaltungsanordnung zur Temperaturkompensation der Güte einer Spule zu schaffen, bei der die Güte der kompensierten Spule nur geringfügig zur Güte der nicht kompensierten Spule reduziert ist, wobei unter Anwendung von nur passiven Elementen der Energiebedarf möglichst gering bleibt. Zur Lösung dieser Aufgabe wird bei einer Schaltungsanordnung der obengenannten Art der ersten Spule eine mit dieser magnetisch gekoppelte zweite Spule parallelgeschaltet, die die zweite Induktivität und den zweiten ohmschen Widerstand sowie N2 Windungen aufweist, wobei die Windungszahl N2 der zweiten Spule von der Windungszahl N1 der ersten Spule höchstens um 10% abweicht. Die Lösung beinhaltet weiterhin einen Heißleiterwiderstand, der in Reihe zur zweiten Spule geschaltet ist und der so gewählt ist, daß er in Verbindung mit den beiden in ihrer Größe variierbaren ohmschen Widerständen der ersten und der zweiten Spule einen vorgegebenen, von der Temperatur nahezu unabhängigen ohmschen Gesamtwiderstand Rg der Schaltungsanordnung ergibt. Hierbei ist vorteilhaft, daß die Induktivität aus den beiden parallelgeschalteten und magnetisch gekoppelten Spulen gegenüber der Induktivität der ersten Spule nicht nen-

2

nenswert abweicht und eine vorgegebene Güte der Spule sich durch entsprechende Dimensionierung der ohmschen Widerstände beider Spulen und dem daran angepaßten Heißleiterwiderstand auf einfache Weise erreichen läßt. Eine zweckmäßige Ausführungsform der genannten Schaltungsanordnung besteht, wenn die Größe der beiden ohmschen Widerstände der beiden Spulen durch entsprechende Wahl des Leiterquerschnitts variiert werden. Die Ausführungsform einer Schaltungsanordnung gemäß Anspruch 3 zeichnet sich durch eine einfache Auslegung der beiden Spulen mit der erforderlichen Anzahl von Litzen und die hiermit in Zusammenhang stehende Ermittlung eines geeigneten Heißleiters zur Herstellung einer Induktivität mit bestimmter Güte aus. Stimmt die Windungszahl N1 der ersten Spule mit der Windungszahl N2 der zweiten Spule überein, so wird hierdurch eine Gesamtinduktivität der Schaltungsanordnung erreicht von der Größe der ersten Induktivität der ersten Spule. Der Einsatz einer Schaltungsanordnung bei einem Schwingkreis erweist sich als zweckmäßig, wenn beim betreffenden Anwendungsfall eine temperaturunabhängige Güte des Schwingkreises erforderlich ist. Ist die Schaltungsanordnung Bestandteil eines induktiven Näherungsschalters, so kann auf hier bisher angewandte aufwendige Temperaturkompensationen des Schaltabstands verzichtet werden, die z.B. eine temperaturabhängige Nachführung eines Abgleichswiderstands mit parallelem Heißleiter zur Lösung hatten. Durch die erfindungsgemäße Temperaturkompensation der Güte der Spule wird auf einfache Weise und kostengünstig die Realisierung hoher Schaltabstände bei induktiven Näherungsschaltern ermöglicht.

Eine Ausführungsform der Erfindung wird anhand einer Zeichnung im folgenden näher erläutert.

Es zeigen

FIG 1    ein Ersatzschaltbild einer Schaltungsanordnung zur Temperaturkompensation der Güte,

FIG 2    ein vereinfachtes Ersatzschaltbild der Schaltungsanordnung mit Spulen gleicher Windungszahlen N1 = N2 gemäß FIG 1,

FIG 3    ein Diagramm mit Temperaturgängen des ohmschen Widerstands für einen idealen und einen real existierenden Heißleiter.

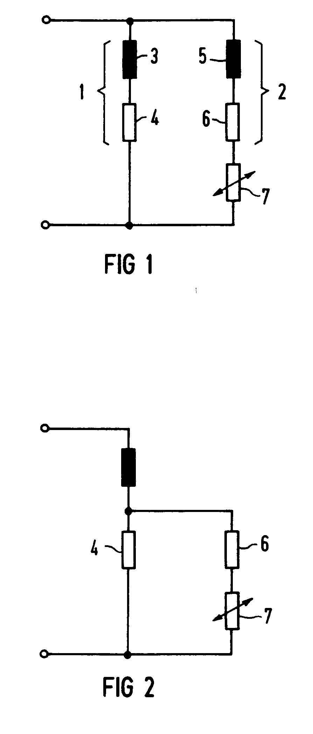

In FIG 1 ist das Ersatzschaltbild zweier Spulen 1, 2 dargestellt, die magnetisch gekoppelt und parallelgeschaltet sein sollen, wobei die erste Spule 1 N1 Windungen, eine erste Induktivität 3 und einen ersten ohmschen Widerstand 4 aufweist und wobei die zweite Spule 2 N2 Windungen, eine zweite Induktivität 5 und einen zweiten ohmschen Widerstand 6 aufweist. In Reihe zur zweiten Spule 2 liegt ein Heißleiterwiderstand 7, dessen anderer Anschlußpunkt mit der ersten Spule kontaktiert ist. Bei Übereinstimmung der Windungszahlen N1 und N2 beider Spulen 1, 2 ergibt sich eine Gesamtinduktivität der Schaltungsanordnung von der Größe der ersten Induktivität 3 der ersten Spule 1. Vereinfachend kann die Schaltungsanordnung nach FIG 1 durch das Ersatzschaltbild gemäß FIG 2 wiedergegeben werden. Hieraus ist zu erkennen, daß der ohmsche Gesamtwiderstand $R_g$ der Schaltungsanordnung aus einer Parallelschaltung zweier Widerstandszweige besteht, wobei im einen Zweig der erste ohmsche Widerstand 4 liegt und der andere Zweig in einer Reihenschaltung aus dem zweiten ohmschen Widerstand 6 und dem Heißleiterwiderstand 7 besteht. Durch entsprechende Wahl des Leiterquerschnitts für die Spulen können deren ohmsche Widerstände 4, 6 variiert werden, um in Verbindung mit dem Heißleiterwiderstand 7 den vorgegebenen ohmschen Gesamtwiderstand $R_g$ zu erreichen. Die Variation des Leiterquerschnitts ist auf einfache Weise dadurch möglich, daß für die Spulen eine entsprechende Anzahl von Litzen-Einzeldrähten verwendet wird. Bei dieser Lösung wird in Abhängigkeit von der Litzengesamtzahl n für beide Spulen, von der Litzenanzahl m für die Kompensationswicklung, d.h. die Spule 2, von dem Widerstand eines Litzen-Einzeldrahts R und von dem gewünschten Wert für den ohmschen Gesamtwiderstand $R_g$ der Sollwert für den ohmschen Widerstand eines fiktiven Heißleiters gemäß der folgenden Gleichung ermittelt:

$$R_t = \frac{R \cdot (Rg \cdot n - R)}{m.R - Rg.m.(n - m)}$$

Hierbei ist der Widerstand des Litzeneinzeldrahtes R gemäß folgender Formel temperaturabhängig:

$$R = R_o \cdot (1 + \alpha \cdot \Delta \vartheta)$$

Mit $R_o$ als Widerstand eines Litzeneinzeldrahts bei bestimmter Temperatur mit $\alpha$ als Temperaturkoeffizienten für Litze und mit $\vartheta$ als Temperaturänderung.

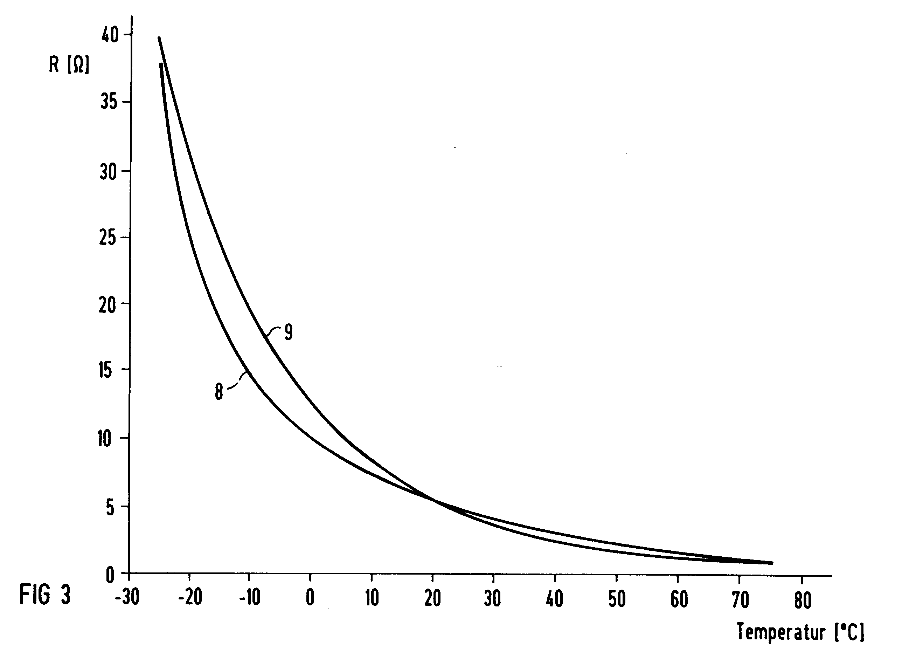

Die genannten Beziehungen machen deutlich, daß mit den in obiger Gleichung gegebenen Freiheitsgraden, z.B. Litzen-Gesamtzahl n, Litzenzahl m für die Kompensationswicklung Variationsmöglichkeiten bestehen, die eine gute Anpassung an einen Kennlinienverlauf für den ohmschen Widerstand in Abhängigkeit von der Temperatur für einen real existierenden Heißleiter ermöglichten. Zur Verdeutlichung der Vorgehensweise ist in FIG 3 ein Diagramm dargestellt mit dem Temperaturgang des ohmschen Widerstands eines nach obiger Formel $R_t$ berechneten Heißleiters gemäß Kurve 8 sowie einer zweiten Kennlinie 9, die einen Temperaturgang des ohmschen Widerstands für einen real existierenden Heißleiter widergibt. Aufgrund der Berechnungen ist es somit möglich, eine gute Angleichung eines Sollverlaufes an real existierende Heißleiterkennlinien aufzufinden.

Die Schaltungsanordnung ist in all den Anwendungsfällen von Vorteil, in denen auf eine nahezu temperaturunabhängige Güte einer Induktivität Wert gelegt wird. Dies trifft z.B. für Schwingkreise zu, deren Güte trotz Temperaturschwankungen möglichst konstant sein soll und insbesondere auch für induktive Näherungsschalter. Bisher wurde bei Näherungsschaltern eine Temperaturkompensation des Schaltabstands dadurch vorgenommen, daß ein Abgleichwiderstand mit parallelgeschaltetem Heißleiter temperaturabhängig nachgeführt wurde. Mit der erfindungsgemäßen Schaltungsanordnung läßt sich die Temperaturkompensation beim Näherungsschalter einfach und kostengünstig durchführen und damit ein hoher Schaltabstand erreichen.

**Patentansprüche**

1. Schaltungsanordnung mit einer ersten Spule (1) mit N1 Windungen, die eine erste Induktivität (3) und einen ersten ohmschen Widerstand (4) aufweist und mit einer zur ersten Spule (1) und mit dieser magnetisch gekoppelten und parallelgeschalteten zweiten Spule (2), die eine zweite Induktivität (5) und einen zweiten ohmschen Widerstand (6) aufweist, mit N2 Windungen, wobei die Windungszahl N2 der zweiten Spule von der Windungszahl N1 der ersten Spule höchstens um 10% abweicht, sowie einem Heißleiterwiderstand (7), der in Reihe zur zweiten Spule (2) geschaltet ist und der so gewählt ist, daß er in Verbindung mit den beiden in ihrer Größe variierbaren ohmschen Widerständen (4, 6) einen vorgegebenen, von der Temperatur nahezu unabhängigen ohmschen Gesamtwiderstand Rg der Schaltungsanordnung ergibt.

2. Schaltungsanordnung nach Anspruch 1, **dadurch gekennzeichnet,** daß die Größe der beiden ohmschen Widerstände (4, 6) durch entsprechende Wahl des Leiterquerschnitts variiert werden.

3. Schaltungsanordnung nach Anspruch 1 oder 2, **dadurch gekennzeichnet,** daß die erste (1) und zweite Spule (2) aus Litze gewickelt sind und die Bestimmung des Leiterquerschnitts, der der Anzahl von Litzen-Einzeldrähten entspricht, ausgehend von dem Sollwert Rg des ohmschen Gesamtwiderstands der Schaltungsanordnung und der Übereinstimmung der errechneten idealen Kennlinienverläufe $R_t$ des ohmschen Widerstands in Abhängigkeit von der Temperatur für einen fiktiven Heißleiter mit den Kennlinienverläufen verfügbarer Heißleiter unter Zugrundelegung der folgenden Gleichung erfolgt:

$$R_t = \frac{R \cdot (Rg \cdot n - R)}{m.R - Rg.m(n-m)}$$

wobei
$R = R_o (1 + \alpha \cdot \Delta \vartheta)$
mit

| | |
|---|---|
| n = | Litzengesamtzahl |
| m = | Anzahl der Litzen für Spule (2) |
| Rg = | Sollwert des ohmschen Gesamtwiderstands der Schaltungsanordnung |
| R = | Widerstand eines Litzen-Einzeldrahts |
| R/(n-m) = | ohmscher Widerstand (4) der ersten Spule (1) |
| R/m = | ohmscher Widerstand (6) der zweiten Spule (2) |
| $R_o$ = | Widerstand eines Litzen-Einzeldrahts bei bestimmter Temperatur |
| $\alpha$ = | Temperaturkoeffizient |
| $\Delta \vartheta$ = | Temperaturänderung |

4. Schaltungsanordung nach einem der vorangehenden Ansprüche, **dadurch gekennzeichnet,** daß die Windungszahl N1 der ersten Spule (1) mit der Windungszahl N2 der zweiten Spule (2) übereinstimmt.

5. Schaltungsanordnung nach einem der vorangehenden Ansprüche, **dadurch gekennzeichnet,** daß sie Bestandteil eines Schwingkreises ist.

6. Schaltungsanordnung nach einem der vorangehenden Ansprüche, **dadurch gekennzeichnet,** daß sie Bestandteil eines induktiven Näherungsschalters ist.

**Claims**

1. Circuit arrangement with a first coil (1) with N1 turns, which first coil has a first inductance (3) and a first ohmic resistance (4), and with a second coil (2) magnetically coupled to the first coil (1) and connected in parallel thereto, which second coil has a second inductance (5) and a second ohmic resistance (6) and has N2 turns, wherein the number of turns N2 of the second coil differs from the number of turns N1 of the first coil at most by 10%, the circuit arrangement also having an NTC thermistor (7) which is connected in series with the second coil (2) and which is selected such that in connection with the two ohmic resistances (4, 6) variable in their magnitude it results in a specified ohmic total resistance Rg for the circuit arrangement which is almost independent of the temperature.

2. Circuit arrangement according to claim 1, characterized in that the magnitudes of the two ohmic resistances (4, 6) are varied through appropriate selection of the conductor cross section.

3. Circuit arrangement according to claim 1 or 2, characterized in that the first (1) and second coil (2) are wound from litz wire and the determination of the conductor cross section, which corresponds with the number of litz-wire single wires, proceeding from the desired value Rg of the total ohmic resistance of the circuit arrangement and the agreement of the calculated ideal characteristic waveforms $R_t$ of the ohmic resistance takes place in dependence upon the temperature for a hypothetical NTC thermistor with the characteristic waveforms of available NTC thermistors, taking the following equation as the basis:

$$R_t = \frac{R \cdot (Rg \cdot n - R)}{m.R - Rg.m\,(n - m)}$$

wherein

$R = \quad R_o\,(1 + \alpha \cdot \Delta \vartheta)$

with

$n = \quad$ total number of litz wires

$m = \quad$ number of litz wires for coil (2)

$Rg = \quad$ desired value of the ohmic total resistance of the circuit arrangement

$R = \quad$ resistance of a single litz wire

$R/(n-m) = \quad$ ohmic resistance (4) of the first coil (1)

$R/m = \quad$ ohmic resistance (6) of the second coil (2)

$R_o = \quad$ resistance of a single litz wire at a certain temperature

$\alpha = \quad$ temperature coefficient

$\Delta \vartheta = \quad$ temperature change.

4. Circuit arrangement according to one of the preceding claims, characterized in that the number of turns N1 of the first coil (1) corresponds with the number of turns N2 of the second coil (2).

5. Circuit arrangement according to one of the preceding claims, characterized in that it is a component part of an oscillating circuit.

6. Circuit arrangement according to one of the preceding claims, characterized in that it is a component part of an inductive proximity switch.

**Revendications**

1. Montage comportant une bobine (1), qui possède N1 spires et contient une première inductance (3) et une première résistance ohmique (4), et une seconde bobine (2), qui est couplée magnétiquement à la première bobine (1) et est branchée en parallèle avec cette bobine et contient une seconde inductance (5) et une seconde résistance ohmique (6) et N2 spires, le nombre de spires N2 de la seconde bobine différant au maximum de 10 % du nombre de spires N1 de la première bobine, ainsi qu'une thermistance (7) qui est branchée en série avec la seconde bobine (2) et qui est choisie de telle sorte qu'elle fournit, en liaison avec les deux résistances ohmiques (4, 6), dont la valeur ohmique peut varier, une résistance ohmique globale Rg prédéterminée du montage, qui est presque indépendante de la température.

2. Montage suivant la revendication 1, caractérisé par le fait qu'on modifie la valeur des deux résistances ohmiques (4,6) au moyen d'un choix correspondant de la section transversale des conducteurs.

3. Montage suivant la revendication 1 ou 2, caractérisé par le fait que la première bobine (1) et la seconde bobine (2) sont formées par une tresse enroulée, et que la détermination de la section transversale des conducteurs, qui correspond au nombre des fils individuels des tresses, s'effectue, à partir de la valeur de consigne Rg de la résistance ohmique totale du montage et de la coïncidence entre les allures idéales calculées $R_t$ des courbes caractéristiques de la résistance ohmique en fonction de la température pour une thermistance fictive, avec les allures des courbes caractéristiques de conducteurs à chaud disponibles, en tenant compte de la relation suivante :

$$R_t = \frac{R \cdot (Rg \cdot n - R)}{m.R - Rg.m(n-m)}$$

avec

R = $R_o (1 + \alpha.\Delta\vartheta)$

et

| | |
|---|---|
| n = | nombre total de tresses |
| m = | nombre des tresses pour la bobine (2) |
| Rg = | valeur de consigne de la résistance ohmique totale du montage |
| R = | résistance d'un fil de tresse individuel |
| R/m(n-m) = | résistance ohmique (4) de la première bobine (1) |
| R/m = | résistance ohmique (6) de la seconde bobine (2) |
| $R_o$ = | résistance d'un fil individuel de la tresse pour une température déterminée |
| $\alpha$ = | coefficient de température |
| $\Delta\vartheta$ = | variation de la température |

4. Montage suivant l'une des revendications précédentes, caractérisé par le fait que le nombre de spires N1 de la première bobine (1) est égal au nombre de spires N2 de la seconde bobine (2).

5. Montage suivant l'une des revendications précédentes, caractérisé par le fait qu'il fait partie d'un circuit oscillant.

6. Montage suivant l'une des revendications précédentes, caractérisé par le fait qu'il fait partie d'un interrupteur inductif de proximité.

FIG 1

FIG 2

7

FIG 3

EP 0 521 175 B1